# EUROPEAN PATENT SPECIFICATION

(11) **EP 1 032 769 B1**
(45) Date of publication and mention of the grant of the patent: **17.05.2006**
(21) Application number: 98958674.8
(22) Date of filing: 20.11.1998
(51) Int. Cl.: F16B 37/04, F16B 21/18, F16B 37/06

(54) **EXPANDED THREADED INSERTS**
AUSDEHNBARE GEWINDEEINSÄTZE
DOUILLES FILETEES EXPANSIBLES

(30) Priority: 20.11.1997 US 66267 P
(43) Date of publication of application: 06.09.2000
(73) Proprietor: Fatigue Technology, Inc., Seattle, WA 98188 (US)
(72) Inventor: REID, Leonard, F., Issaquah, WA 98027 (US); JOHNSON, Timothy, H., Seattle, WA 98178 (US)
(74) Representative: Hoorweg, Petrus Nicolaas
(86) International application number: PCT/US1998/024851
(87) International publication number: WO 1999/027262

(56) References cited:
- US-A- 2 672 659
- US-A- 4 734 001
- US-A- 5 026 233
- US-A- 5 096 349
- US-A- 5 380 136
- US-A- 5 468 104
- US-A- 5 590 900

## Description

### Cross Reference to Related Application

This application claims priority based on provisional patent application number 60/066,267, filed November 20, 1997 and entitled Expanded Threaded Inserts.

### Technical Field

The present invention relates to a fastener receiving insert assembly for installation into an opening in a member comprising a tubular body sized to be insertable into the opening, said tubular body having internal threads; a tubular extension on said body extending axially from said body, said tubular extension including a radially opening girth groove; a lock ring located in said girth groove; and to a composite member comprising such a fastener receiving insert assembly. The invention also relates to the provision of a method for securing the fastener receiving insert assembly in an opening in a member. Such a fastener receiving insert assembly is known from US-A-5,590,900.

### Background of the invention

The background of what may be termed the "nut-plate technology" is discussed in US-A-5,096,349, granted March 17, 1992, to Michael A. Landy et al., and in US-A-5,245,743, granted September 21, 1993, to Michael A. Landy et al., and in US-A-5,380,136, granted January 10, 1995, to Charles M. Copple et al., and in US-A-5,405,228, granted April 11, 1995, to Leonard F. Reid et al., and in US-A- 5,468,104, granted November 21, 1995, to Leonard F. Reid et al. These patents disclose nut mounting structures characterized by a tubular stem that fits into an opening in a wall where a bolt is to be located. The tubular stem is radially expanded within the opening to connect the nut mounting structure to the wall.

There is a need for a bolt receiving insert that is expandable within an opening in a member to connect it to the member, and which is itself internally threaded so that a separate nut is unnecessary. There is a need for a bolt receiving insert that can be inserted into an opening in a composite structure with no access to the back side. The insert must be insertable from the front side of the structure and then be expandable in the opening by use of tooling positioned only on the front side of the structure. A purpose of such an insert is to facilitate attachment of a panel or other member to a parent structure using a threaded bolt. The insert must resist torque loading from the bolt and pull-out due to the axially load during torque-up of the bolt. There is further a need for a bolt receiving insert that is adapted for easy and quick placement and retention within an opening in a member. There is also a need for a bolt receiving insert that is sealed and will provide a sealed closure for the opening when no bolt is connected to the insert. It is believed that the bolt receiving insert of this invention will fulfill these needs.

### Disclosure of the invention

A fastener receiving insert assembly of the invention is basically characterized in that said tubular body is constructed from a material allowing it to be radially expanded after installation in the opening, so that a sufficient interference fit can be established between the tubular body and the opening in the member by the radial expansion of the tubular body, the fit being sufficient to resist torque-out of the tubular body with respect to the member, and that the lock ring has a static outside diameter larger than the outside diameter of the tubular body; so that, after installation the lock ring is abutted against the member for preventing the insert assembly from being drawn back through the member.

A tubular extension extends axially from one end of the body and includes a radially outwardly opening girth groove. A lock ring is retained in the girth groove. The lock ring has a free state external diameter that is larger than the outside diameter of the tubular body. The tubular body is inserted through an opening in a member and moved to place the lock ring substantially against the near side of the member. Then, the tubular body is radially expanded to hold it into the opening. Thereafter, a bolt is connected to the tubular body by engaging its threads with the threaded inside surface of the tubular body.

In preferred form, the lock ring tapers as it extends axially outwardly from the body. It tapers down to a diameter at its outer end that is substantially equal to the external diameter of the tubular extension. The lock ring is split to form a radial gap. This allows the lock ring to be expanded for insertion on the fastener element. Preferably also, the lock ring and girth groove are adapted to permit the lock ring to be radially compressed into the girth groove. This allows the fastener element to be inserted into an opening in a member with the extension leading until the tapered lock ring is in contact with the periphery of the opening. Then, the fastener element is forced endwise towards the member to force the lock ring into an through the opening in the member. Contact between the periphery of the opening and the tapered surface of the lock ring serves to compress the lock ring radially inwardly, allowing it to move into and through the opening in the member. Once the lock ring has passed entirely through the opening, it will expand radially in the girth groove to place its trailing end surface closely adjacent the second side of the member. Once expanded, the lock ring will prevent the fastener element from being pulled back out of the opening.

According to the invention, the tubular extension can have either an open outer end or a closed outer end. A closed outer end will provide a sealed connection. The closed extension end of the tubular insert may be sufficiently long that it can receive a mandrel end portion, inserted into it through the tubular body, so that a pull on the mandrel can be used to radially expand the tubular body for securing it within the opening.

According to another aspect of the invention, the lock ring may be a radially flat ring that is inserted into a complementary girth groove after the fastener element has been positioned within the opening with the girth groove on the second side of the member.

According to an aspect of the invention, the fastener element is used with a composite structure. The member is constructed from a composite material and an opening is formed in the member. The tubular body of the fastener element is inserted into the opening and the tubular body is radially expanded to secure it to the composite material surrounding the opening.

According to the invention, the fastener element can be installed in an opening in a member from a single side of the member. The fastener element is placed on the small diameter portion of a mandrel that is attached to a puller tool. Then, a large diameter leading portion of the mandrel is aligned with an opening in a member and is then pushed forwardly to move it into and through the opening and position the tubular body in the opening. Then, the puller tool is operated to pull the mandrel back through the fastener element while holding the fastener element within the opening. An increasing diameter portion of the mandrel is pulled through the tubular body of the fastener element by the puller tool. In the process, the increasing diameter portion of the mandrel exerts a radially outwardly directed force on the tubular body, expanding it in the opening, to create a secure interference fit between the outside surface of the tubular body and the adjacent inside surface of the opening. In preferred form, a tapered lock ring is used to hold the fastener element against axial movement while the mandrel is being pulled through the tubular body.

It is within the scope of the invention to use a mandrel plus what sleeve, a mandrel only, or a split mandrel for radially expanding the tubular body to anchor the fastener element in the opening.

A part of the invention was the discovery that an internally threaded tubular insert can be expanded radially to anchor it within an opening in a member, by use of expansion tooling, without the internal threads being damaged. Nevertheless, it is contemplated by the present invention to dress the threads following the expansion, if some dressing should be necessary. The invention further includes providing the threads with a protective sleeve that can be removed after the fastener element is expanded and secured to the member.

Other objects, features and advantages of the invention will be hereinafter described in greater detail, as a part of the description of the best mode and the alternative embodiments of the invention.

### Brief Description of the Drawings

Like reference numerals are used to designate like parts throughout the various figures of the drawing, wherein:
Fig. 1 is a pictorial view of a typical embodiment of the fastener element or insert, shown with a conical lock ring attached, such view being taken from above and looking towards one side and the rear end of the insert;
Fig. 2 is an exploded pictorial view of the fastener element, showing the lock ring positioned endwise from the rest of the element, such view showing a preferred shape of the lock ring and a preferred shape of the annular channel or girth groove that receives the lock ring, such view being taken from above and looking towards one side and the extension end of the fastener element;
Fig. 3 is a longitudinal sectional view taken through the fastener element, but with the lock ring omitted, such view showing internal threads in the tubular body;
Fig. 4 is a side elevational view of the structure shown by Fig. 3, including dimension lines;
Fig. 5 is a side elevational view of the lock ring for the fastener element shown by Figs. 3 and 4, such view including dimension lines;
Fig. 6 is a longitudinal sectional view of the fastener insert of Figs. 1-5 after it is anchored within an opening within a member;

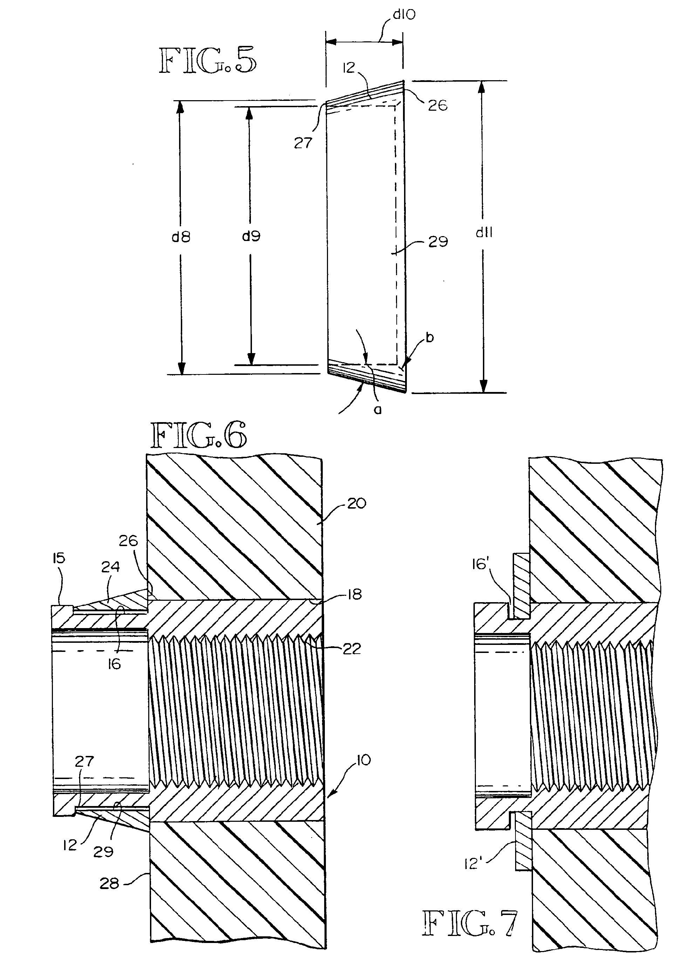

Fig. 7 is a fragmentary view similar to Fig. 6, but showing a radially flat lock ring within a much narrower girth groove in the extension of the fastener element;
Figs. 8-14 are diagrams of the major steps of the invention; and
Fig. 15 is a view like Fig. 6, but of a modified form of fastener element, such fastener element having a closed outer end to provide a dome on the lock ring end of the fastener element.

### Best Mode for Carrying Out the Invention

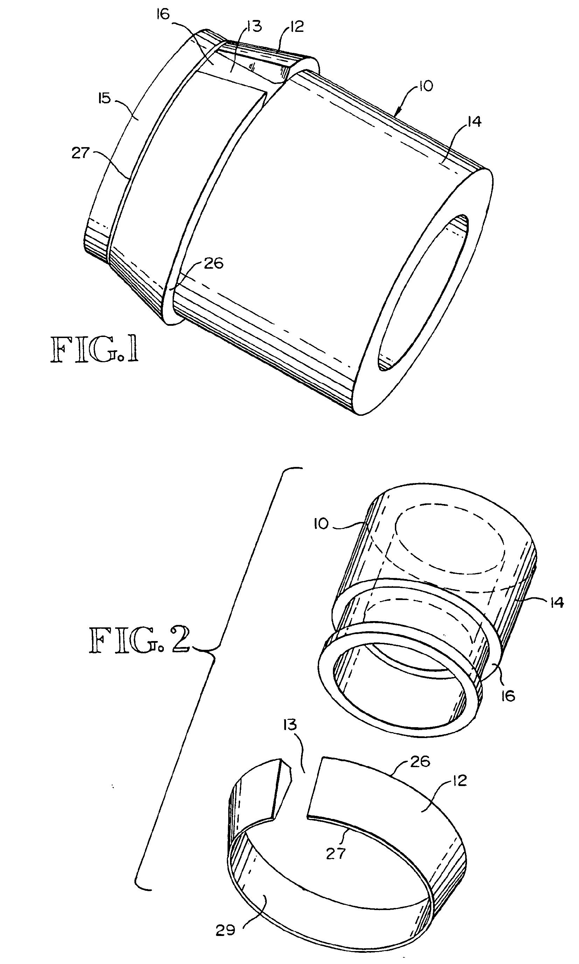

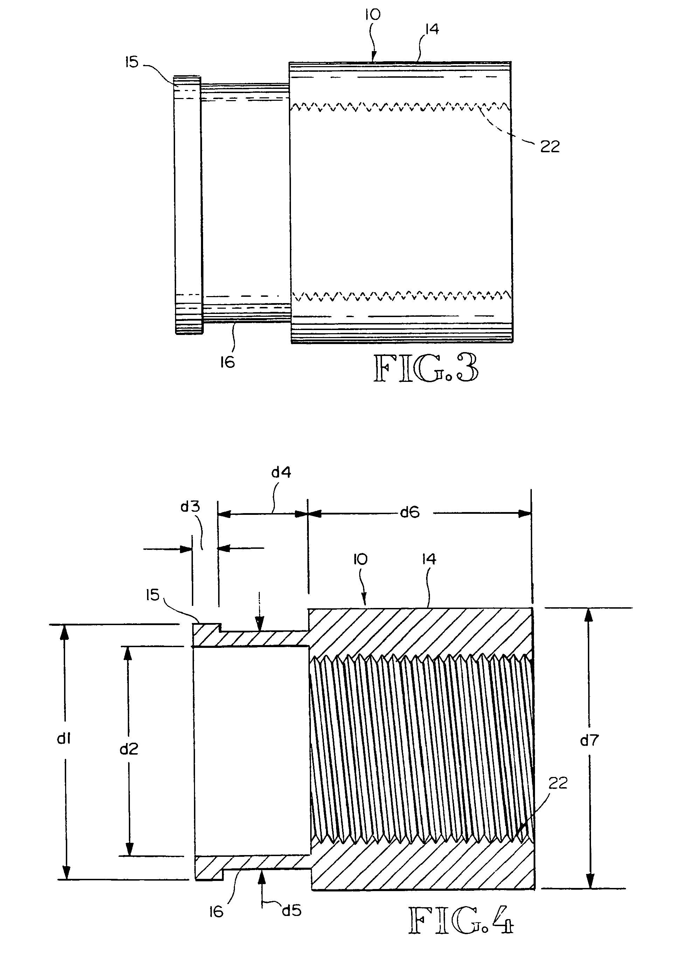

Figs. 1-6 show a preferred form of the fastener element or insert 10. It comprises a body portion 14 having an axial extension 15 which includes an annular channel or girth groove 16 on its outer surface. As shown by Figs. 1-4 and 6, the girth groove 16 opens radially outwardly. The girth groove 16 is provided to receive a lock ring which in the preferred embodiment is shown in the form of a tapered ring 12 that is split radially. The split is designated 13 in Figs. 1 and 2.

Fig. 6 shows the insert 10 within an opening 18 in a member 20. For example, member 20 may be constructed from a structural plastic or composite material. While it is desirable to use the insert 10 in composite material, it can be used in metal or other materials as well.

The lock ring 12 may be positioned within the girth groove 16, in the manner shown by Figs. 1 and 6. The presence of the split 13 makes is possible to open up the lock ring 12 and snap fit it onto the insert 10, within the girth groove 12. The lock ring 12 has a large diameter end 26 that is adjacent the tubular body 14. It also has a small diameter opposite end. As clearly illustrated, it decreases in diameter (tapers) from its large end 26 to its opposite end 27. As shown in Fig. 6, the lock ring 12 preferably has an inside diameter 29 that is larger than the outside diameter of girth groove 16. This provides a radial space between the lock ring 12 and the girth groove 16, into which the lock ring 12 can be radially compressed. In accordance with an aspect of the invention, the lock ring 12 is positioned on the insert 10, with its inner portion within the girth groove 16. When lock ring 12 is not compressed, it has a static outside dimension that places a portion of it outside of the outer surface of the tubular body 14. This portion includes an outer portion of radial surface 26, shown in Fig. 6 to be positioned against surface 28 of member 20.

After lock ring 12 is installed on the insert 10, the extension end of insert 10 is brought into alignment with the opening 18, on a first side of the member 20. The outside diameter of extension 15, at its outer end, is smaller than the outside diameter of the body portion 14 and is also smaller than the diameter of the opening 18. As a result, extension 15 can fit easily into the opening 18. After extension 15 is started in an opening 18, the insert 10, with lock ring 12 attached, is moved endwise inwardly until the sloping outer surface of the lock ring 12 contacts the periphery of the opening 18. Then, it becomes necessary to forcefully move the insert 10 into the opening 18. When forced, insert 10 will move axially and in the process the periphery of the opening 18 will exert a squeezing force on the lock ring 18, compressing it radially and moving it further into the girth groove 16. The parts are dimensioned such that the lock ring 12 will compress sufficiently to allow it and the rest of insert 10 to move first into and then through the opening 18. Once lock ring 12 has moved out from the opening 18 at the second end of the member 20, it will resume its original static shape. When compressed, it is in the nature of a spring. The stored spring energy returns the lock ring 12 to its static shape once the outer surface of ring 12 loses contact with the periphery of opening 18. As shown by Fig. 6, the lock ring 12 expands to place the outer region of radial surface 26 into abutting contact with the surface 28 on the second side of member 20.

Any type of system for radially expanding the insert 10 can be used for connecting the insert 10 to the member 20. These systems include a mandrel only system, a split mandrel system, and a mandrel and sleeve system. The mandrel, when a mandrel alone is use, or the split sleeve, when a split sleeve is used, directly contact the threads 22. When a split sleeve is used, it provides some protection for the threads.

By way of typical and therefore nonlimitive example, some dimensions are given in Figs. 4 and 5. The dimensions present an example of tolerances and clearances that may be used in the system. Referring to Fig. 4, dimension D1 may be 8,66 ± 0,0508 mm (0.341 ±.002 inches). Dimension D2 may be 6,48 ± 0,0762 mm (0.255 ±.003 inches). Dimension D3 may be 0,762 ± 0,127 mm (0.030 ± .005 inches). Dimension D4 may be 2,54 ± 0,127 mm (0.100 ± .005 inches). Dimension D5 may be 7,24 ± 0,0762 mm (0.285 ± .003 inches). Dimension D6 may be 5,97 ± 0,0/-0,127 (0.235 + .00 / -.005). Dimension D7 may 8,70 ± 0,0178 mm (0.3425 ± .0007 inches). The threads 22 may be 1/4-28UNF-2B threads. After tapping, the finished threads may minor to 5,79 ± 0,0254 mm (0.228 ± .001 inches). Referring to Fig. 5, dimension D8 may be 8,13 ± 0,0508 (0.320 ± .002). Dimension D9 may be 7.87 ± 0,0508 mm (0.310 ± .002 inches). Dimension D10 may be 2,29 ± 0,127 mm (0.090 ± .005 inches). Dimension D11 may be 9,14 ± 0,0508 mm (0.360 ± .002 inches). Angle A may be 12.5°. Angle B may be 45° X.010-.015.

Insert 10 may be made from various materials, including 17.4 stainless steel. Tubular body 14 may be provided with a sand blasted outside surface. Slot 13 may be about 1,52 ± 0,127mm (0.060 ± .005) inches wide. The lock ring 12 may be made from 17-4 stainless steel, with a H 102 condition. The finish may be RMS 64 or better.

As illustrated, the taper on the tapered split ring 12 is slight. The radial surface 26 projects radially outwardly from the tubular body 14 a small distance. This is all that is necessary. The taper provides a good lead-in for the ring 12. The surface 26 provides a lock surface for locking the insert 10 within the opening 18.

Instead of the ring 12 and groove 16, a thinner groove 16' can be used and the lock ring 12' may be flat, and may be like or similar to the ring 14 disclosed in the aforementioned US-A- 5,380,136. The groove 16' may be like the snap ring groove disclosed in the same patent. In order to use the snap ring 12', there must be access to both sides of the work piece 20. The insert 10' can be installed from one side of the workpiece, the side where the mandrel puller is located. Insert 10' may also be used if access is available to both sides of the workpiece. In this case, an integral radial flange on one end of the insert can be provided in lieu of the snap-ring 12' or the conical ring 12. See, for example, elements 428 and 429 in Fig. 25 of US-A- 5,380,136. A circular flange 429 would be preferred.

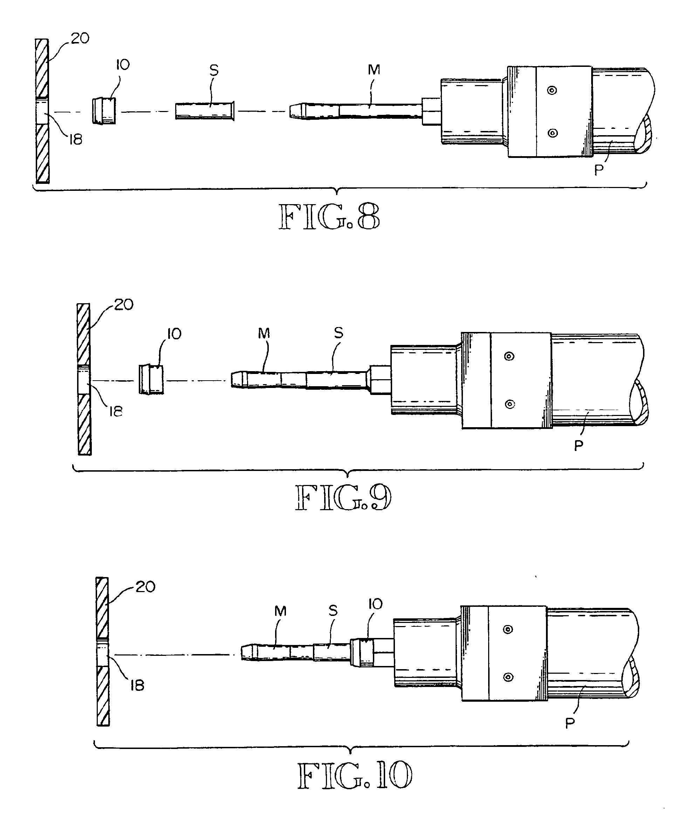

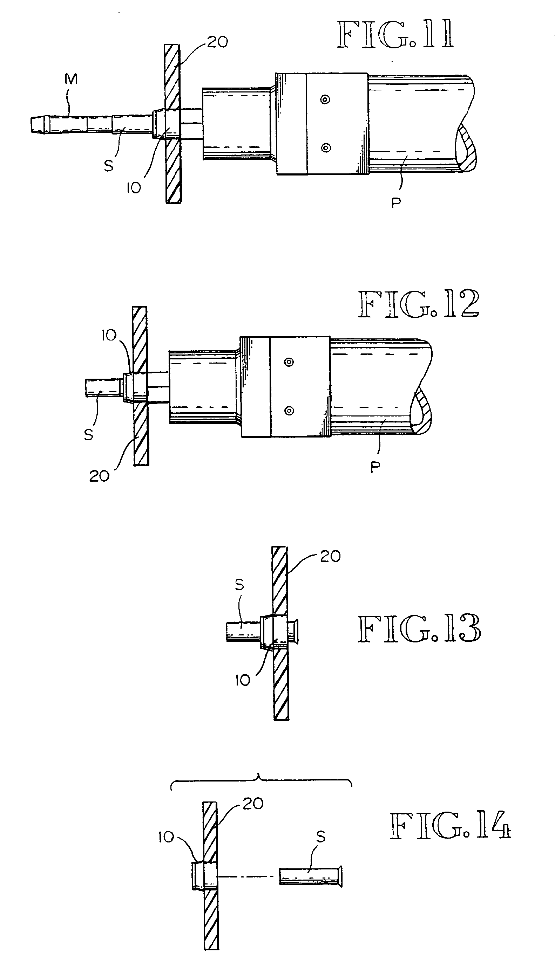

Figs. 8-14 illustrate a preferred method of installing the insert 10 within an opening 18 in a member 20. This method will now be described with reference to Figs. 8-14:
1. A split sleeve S of the appropriate dimension (diameter, thickness, length etc.) is placed over the major diameter of a specially sized expansion mandrel M and along the minor diameter of the mandrel M until it is seated against the inner jaw of a uniquely designed nosecap assembly on puller P. The split sleeve S may or may not have a flared end. If the sleeve S is flared, the sleeve S must be oriented so that the flare is against the nosecap.
2. The Composite Threaded Insert Assembly (insert body and slotted conical ring) is then slid onto the mandrel M and over the seated split sleeve S until it is against the nosecap as well. The insert assembly should be oriented so that the straight portion of the insert body, intended for mating with the starting hole in the parent material and commonly referred to as the insert barrel, is against the nosecap and the flange restraining the slotted conical ring is away from the nosecap.
3. The entire installation assembly, including the mandrel M, split sleeve S and composite threaded insert, is guided into a purpose prepared, precisely dimensioned starting hole in the intended parent structure 20 so that the flange retaining the slotted conical ring is fitted into the bore of the hole.
4. Once placed part way into the starting hole, a modest force is applied to the installation tooling and composite threaded insert assembly by the operator to fit the mandrel M, insert 10 and sleeve S through the hole 18 and the nosecap up against the parent structure. During this operation the slotted conical ring 12 is compressed into a groove 16 on the outside diameter of the insert body 14 and can be passed through the bore of the starting hole. Upon exiting the starting hole on the opposite side of the parent structure 20, the slotted conical ring 12 springs open again and provides a flange to prevent the composite threaded insert 10 from being drawn back through the parent structure 20 during the fastener clamp up.
5. After the composite threaded insert 10, mandrel M and sleeve S have been guided through the starting hole 18, and the nosecap is up against the surface of the parent structure 20, the hydraulic puller unit P is activated to draw the major diameter of the mandrel M through the split sleeve and inside diameter of the insert body 14. The insert body 14 itself is permanently deformed by the subsequent radial expansion and the insert barrel grows in diameter so that it becomes interference fit with the wall of the starting hole.
6. When the mandrel M has passed inside the nosecap, the composite threaded insert 10 has been successfully installed and the installation tooling may be removed. The deformed split sleeve S may be still present in the inside diameter of the insert body after installation. This sleeve S is removed by hand or with a small tool (pliers etc. whatever is convenient) and the composite threaded insert 10 is ready for use.

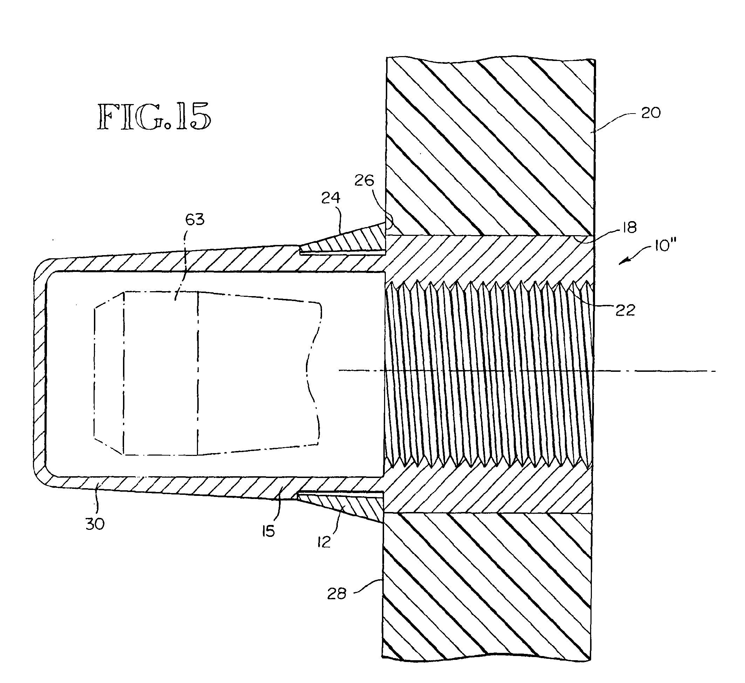

Fig. 15 shows a modified insert 10" that is like insert 10 except that the extension 15 includes a closed, domed shaped end portion 30. The dome 30 closes the split ring side of the insert 10''. The insert 10'' may be used when a leak proof joint is desired. Also, a O-ring may be placed between the insert 10'' and the opening 18, to enhance sealing. A short-ended mandrel 63 can be used for installing the insert 10''. An end portion of the mandrel 63 is shown by phantom line in Fig. 15. As should be apparent, the puller P is on the side of the member 20 opposite the doom 30.

An internally threaded insert is fabricated with an extended groove on one end to accommodate a conical split ring which has free state external diameter slightly larger than the outside diameter of the insert. The conical split ring can be compressed to the same outside diameter to enable the ring end of the insert to be placed through the hole from the front side and pushed through the slightly cleared hole. The tapered conical section of the ring facilitates insertion and compression of the ring to slide through the hole. On exit from the backside of the hole the ring will expand - or spring back to its normal diameter thereby creating a restraint to prevent the insert from pulling back through the hole.

The threaded insert is then cold expanded into the hole using lubricated sleeve and expansion mandrel combination similar to the current Fatigue Technology Inc. (FTI) BushLoc® or ForceTec® processes. Expansion of the insert into the hole creates a high interference fit of the insert into the hole which resists torque out of the insert. The conical split ring prevents the insert from pulling through the hole during the torque-up of the attaching bolt.

During expansion of the threaded insert the threads are slightly deformed but not sufficient to prevent engagement of the threads on the mating attaching bolt or fastener. To preclude excessive damage to the threads inside the insert, a re-usable or sacrificial (one-time use) hollow, an externally threaded sleeve or liner also may be initially threaded into the insert to protect the threads. The lubricated split sleeve and expansion mandrel are then inserted through the hollow liner and then the liner and insert are expanded in place as described. The threaded liner would be necessary when expansion is effected by a split mandrel or a solid mandrel method to prevent engagement of the expansion devices in the threads of the insert. The subject threaded liner is removed from the insert after expansion.

Initial testing of the invention has shown very high resistance to torque-out and pull-out when installed in both carbon fiber and Kevlar-carbon fiber plates ranging from 0.115" to 0.155" thick.

The illustrated embodiments are only examples of the present invention and, therefore, are non-limitive. It is to be understood that many changes in the particular structure, materials and features may be made without departing from the invention. Therefore, it is my intention that my patent rights not be limited by the particular embodiments illustrated and described herein, but rather determined by the following claims.

## Claims

1. A fastener receiving insert assembly for installation into an opening (18) in a member (20) comprising:
a tubular body (14) sized to be insertable into the opening (18), said tubular body having internal threads (22);
a tubular extension (15) on said body (14) extending axially from said body, said tubular extension including a radially opening girth groove (16, 16');
a lock ring (12, 12') located in said girth groove (16, 16');
wherein said tubular body (14) is constructed from a material allowing it to be radially expanded after installation in the opening,
so that a sufficient interference fit can be established between the tubular body (14) and the opening (18) in the member (20) by the radial expansion of the tubular body,
the fit being sufficient to resist torque-out of the tubular body (14) with respect to the member (20),
and the lock ring has a static outside diameter (d11) larger than the outside diameter (d7) of the tubular body (14);
so that, after installation the lock ring (12,12') is in abutting contact with the member (20) for preventing the insert assembly (10) from being drawn back through the member (20);
whereby after the tubular body (14) is radially expanded to hold it in the opening (18), a fastener can be threaded into the threaded opening (18).

2. Fastener receiving insert assembly of claim 1, wherein the external diameter of the lock ring (12, 12') decreases as the lock ring extends axially outwardly in the girth groove (16, 16').

3. Fastener receiving insert assembly of claim 2, wherein the lock ring (12) tapers down to a diameter (d8) at a first end that is substantially equal to the external diameter (d5) of the tubular extension.

4. Fastener receiving insert assembly of claim 1, wherein the outer surface of the tubular body is cylindrical.

5. Fastener receiving insert assembly of claim 1, 2 or 3, wherein the lock ring (12, 12') is a split ring.

6. Composite member (20) having first and second sides and a through opening (18) extending between the first and second sides; comprising a fastener receiving insert assembly according to any of the previous claims, wherein the tubular body (14) is positioned within the opening (18) in the composite member (20) and is moved to place the lock ring (12, 12') against a side of the member, and the tubular body is radially expanded to hold it in the opening, and whereby a bolt can be connected to the threaded inside surface of the tubular body.

7. Method for installing a fastener receiving insert assembly in an opening (18) in a member (20), comprising:
providing a fastener receiving insert assembly having a tubular body (14) with a cylindrical outside surface and a threaded inside surface (22), and a tubular extension (15) on said body extending axially from said body and including a radially opening girth groove (16, 16');
positioning a lock ring (12, 12') in said girth groove (16, 16'), said lock ring having a free state external diameter that is larger than the outside diameter (d7) of the tubular body (14);
moving the tubular body (14) and extension (15) into and through the opening in the member (20) causing the lock ring (12, 12') to compress into the girth groove (16, 16') and to spring open again upon exiting the opening on the opposite side of the member (20);
threading a sacrificial, externally threaded sleeve into the tubular body (14);
radially expanding the tubular body (14) to establish a sufficient interference fit between the tubular body (14) and the opening (18) in the member (20), with the lock ring substantially against the side of the member,
wherein the threaded inside surface (22) of the tubular body (14) is slightly deformed during the radial expansion of the tubular body (14);
removing the sacrificial, externally threaded sleeve from the tubular body (14);
whereby a threaded portion of a fastener can be thread connected to the slightly deformed threaded inside surface (22) of the tubular body (14), for connecting the fastener to the tubular body (14).

8. Method according to claim 7, comprising providing a mandrel (M) having a portion that increases in diameter, and radially expanding the tubular body (14) by moving the mandrel (M) axially through the tubular body (14), to cause the increasing diameter portion of the mandrel to exert an axially directed force on the tubular body (14).

9. Method according to claim 7, comprising positioning the lock ring (12, 12') in said girth groove (16, 16') that has an external diameter that decreases as the lock ring extends axially outwardly, down to a diameter at its outer end that is substantially equal to the external diameter of the tubular extension, and inserting the fastener receiving assembly into the opening (18) in the member (20), extension end first, to move the lock ring into contact with a portion of the member surrounding the opening (18), and applying an endwise force on the insert to move the lock ring into and through the opening into a position where the lock ring is positioned outwardly adjacent the second side of the opening.

10. Method according to claim 7, comprising providing a mandrel (M) puller, a mandrel having a small diameter end connected to the puller (P), a larger diameter opposite end, and a tapered intermediate section, placing a split sleeve (5) on the small diameter section of the mandrel, placing a said insert assembly on the split sleeve (5) while it is on the small diameter section of the mandrel (M), inserting the large diameter end of the mandrel into the opening in the member, moving the puller (P) and mandrel (M) forwardly to push the large diameter end of the mandrel (M) through the opening (18) and position the insert assembly and split sleeve (15) within the opening (18), and with the lock ring (12, 12') positioned adjacent the side of the member opposite the puller tube, operating the puller tube to pull the mandrel through the split sleeve and the insert assembly, for radially expanding both the split sleeve (5) and the insert assembly to in that manner radially expand the insert assembly into an interference fit within the opening (18), and then removing the mandrel (M) and the split sleeve (5) from the insert, leaving the insert in the opening connected to the member.

11. Method according to claim 7, wherein providing a fastener receiving insert assembly having a tubular body (14) includes the tubular body (14) being cylindrical.

## Patentansprüche

1. Befestigungselement-Aufnahme-Einsatzanordnung zur Installation in einer Öffnung (18) in einem Element (20), die umfasst:
einen röhrenförmigen Körper (14) der so bemessen ist, dass er in die Öffnung (18) eingeführt werden kann, wobei der röhrenförmige Körper Innengewindegänge (22) hat;
eine röhrenförmige Verlängerung (15) an dem Körper (14), die sich von dem Körper axial erstreckt, wobei die röhrenförmige Verlängerung eine sich radial öffnende Umfangsnut (16, 16') enthält;
einen Arretierring (12, 12'), der sich in der Umfangsnut (16, 16') befindet,
wobei der röhrenförmige Körper (14) aus einem Material hergestellt ist, das es ermöglicht, dass er nach Installation in der Öffnung radial ausgedehnt wird,
so dass eine ausreichende Presspassung zwischen dem röhrenförmigen Körper (14) und der Öffnung (18) in dem Element (20) durch die radiale Ausdehnung des röhrenförmigen Körpers erzeugt werden kann, wobei die Passung ausreicht, um Herausdrehen des röhrenförmigen Körpers (14) in Bezug auf das Element (20) zu widerstehen,
und der Arretierring einen unveränderlichen Außendurchmesser (d11) hat, der größer ist als der Außendurchmesser (d7) des röhrenförmigen Körpers (14);
so dass nach Installation der Arretierring (12, 12') in anliegendem Kontakt mit dem Element (20) ist, um zu verhindern, dass die Einsatzanordnung (10) durch das Element (20) hindurch zurückgezogen wird;
so dass, nachdem der röhrenförmige Körper (14) radial ausgedehnt worden ist, um ihn in der Öffnung (18) zu halten, ein Befestigungselement in die mit Gewinde versehene Öffnung (18) eingeschraubt werden kann.

2. Befestigungselement-Aufnahme-Einsatzanordnung nach Anspruch 1, wobei der Außendurchmesser des Arretierrings (12, 12') im Verlauf des Arretierrings in der Umfangsnut (16, 16') axial nach außen abnimmt.

3. Befestigungselement-Aufnahme-Einsatzanordnung nach Anspruch 2, wobei sich der Arretierring (12) bis auf einen Durchmesser (d8) an einem ersten Ende verjüngt, der im Wesentlichen dem Außendurchmesser (d5) der röhrenförmigen Verlängerung gleich ist.

4. Befestigungselement-Aufnahme-Einsatzanordnung nach Anspruch 1, wobei die Außenfläche des röhrenförmigen Körpers zylindrisch ist.

5. Befestigungselement-Aufnahme-Einsatzanordnung nach Anspruch 1, 2 oder 3, wobei der Arretierring (12, 12') ein Spaltring ist.

6. Zusammengesetztes Element (20), das eine erste und eine zweite Seite sowie eine Durchgangsöffnung (18) hat, die sich zwischen der ersten und der zweiten Seite erstreckt, und das eine Befestigungselement-Aufnahme-Einsatzanordnung nach einem der vorangehenden Ansprüche umfasst, wobei der röhrenförmige Körper (14) in der Öffnung (18) in dem zusammengesetzten Element (20) positioniert ist und bewegt wird, um den Arretierring (12, 12') an eine Seite des Elementes zu platzieren, und der röhrenförmige Körper radial ausgedehnt wird, um ihn in der Öffnung zu halten, und wobei eine Schraube mit der mit Gewinde versehenen Innenfläche des röhrenförmigen Körpers verbunden werden kann.

7. Bereitstellen einer Befestigungselement-Aufnahme-Einsatzanordnung, die einen röhrenförmigen Körper (14) mit einer zylindrischen Außenfläche und einer mit Gewinde versehenen Innenfläche (20) und eine röhrenförmige Verlängerung (15) an dem Körper hat, die sich axial von dem Körper aus erstreckt und eine sich radial öffnende Umfangsnut (16, 16') enthält;
Positionieren eines Arretierrings (12, 12') in der Umfangsnut (16, 16'), wobei der Arretierring in freiem Zustand einen Außendurchmesser hat, der größer ist als der Außendurchmesser (d7) des röhrenförmigen Körpers (14);
Bewegen des röhrenförmigen Körpers (14) und der Verlängerung (15) in die Öffnung in dem Element (20) und durch sie hindurch, wodurch der Arretierring (12, 12') in die Umfangsnut (16, 16') hinein gedrückt wird und sich beim Austreten aus der Öffnung an der gegenüberliegenden Seite des Elementes (20) federnd wieder öffnet;
Einschrauben einer mit Außengewinde versehenen Verschleißmuffe in den röhrenförmigen Körper (14);
radiales Ausdehnen des röhrenförmigen Körpers (14), um eine ausreichende Presspassung zwischen dem röhrenförmigen Körper (14) und der Öffnung (18) in dem Element (20) zu erzeugen, wobei der Arretierring im Wesentlichen an der Seite des Elementes anliegt;
wobei die mit Gewinde versehene Innenfläche (22) des röhrenförmigen Körpers (14) während der radialen Ausdehnung des röhrenförmigen Körpers (14) leicht verformt wird;
Entfernen der mit Außengewinde versehenen Verschleißmuffe aus dem röhrenförmigen Körper (14);
wobei ein mit Gewinde versehener Abschnitt eines Befestigungselementes mit der leicht verformten mit Gewinde versehenen Innenfläche (22) des röhrenförmigen Körpers (14) schraubend verbunden werden kann, um das Befestigungselement mit dem röhrenförmigen Körper (14) zu verbinden.

8. Verfahren nach Anspruch 7, das das Bereitstellen eines Doms (M) umfasst, der einen Abschnitt hat, dessen Durchmesser zunimmt, und radiales Ausdehnen des röhrenförmigen Körpers (14) durch axiales Bewegen des Doms (M) durch den röhrenförmigen Körper (14) hindurch, um zu bewirken, dass der Abschnitt des Doms mit zunehmendem Durchmesser eine axial gerichtete Kraft auf den röhrenförmigen Körper (14) ausübt.

9. Verfahren nach Anspruch 7, das das Positionieren des Arretierrings (12, 12') in der Umfangsnut (16, 16') der einen Außendurchmesser hat, der im Verlauf des Arretierrings axial nach außen auf einen Durchmesser an seinem äußeren Ende abnimmt, der im Wesentlichen den Außendurchmesser der röhrenförmigen Verlängerung entspricht, und Einführen der Befestigungselement-Aufnahme-Anordnung in die Öffnung (18) in dem Element (20) mit dem Ausdehnungsende zuerst, um den Arretierring in Kontakt mit einem Abschnitt des Elementes zu bewegen, der die Öffnung (18) umgibt, und Ausüben einer stirnseitigen Kraft auf den Einsatz, um den Arretierring in die Öffnung hinein und durch sie hindurch an eine Position zu bewegen, an der der Arretierring an die zweite Seite der Öffnung angrenzend außen angeordnet ist, umfasst.

10. Verfahren nach Anspruch 7, das das Bereitstellen eines Abziehers für den Dorn (M), eines Dorns mit einem Ende mit kleinem Durchmesser, der mit dem Abzieher (P) verbunden ist, einem gegenüberliegenden Ende mit größerem Durchmesser und einem verjüngten Mittelabschnitt, das Anordnen einer Spalthülse (5) an dem Abschnitt mit kleinem Durchmesser des Dorns (M), Platzieren der Einsatzanordnung an der Spalthülse (5), während sie sich an dem Abschnitt des Doms (M) mit kleinem Durchmesser befindet, Einführen des Endes des Doms mit großem Durchmesser in die Öffnung in dem Element, Bewegen des Abziehers (P) und des Doms (M) nach vorn, um das Ende des Dorns (M) mit großem Durchmesser durch die Öffnung (18) zu schieben und die Einsatzanordnung sowie die Spalthülse (15) in der Öffnung (18) zu positionieren, und, wenn der Arretierring (12, 12') an die Seite des Elementes gegenüber der Abziehröhre angrenzend positioniert ist, Betätigen der Abziehröhre zum Ziehen des Doms durch die Spalthülse und die Einsatzanordnung, um sowohl die Spannhülse (5) als auch die Einsatzanordnung radial auszudehnen und auf diese Weise die Einsatzanordnung in eine Presspassung in der Öffnung (18) radial auszudehnen, und dann Entfernen des Dorns (M) und der Spannhülse (5) aus dem Einsatz umfasst, so dass der Einsatz in der Öffnung mit dem Element verbunden zurückbleibt.

11. Verfahren nach Anspruch 7, wobei Bereitstellen einer Befestigungselement-Aufnahme-Einsatzanordnung mit einem röhrenförmigen Körper (14) einschließt, dass der röhrenförmige Körper (14) zylindrisch ist.

## Revendications

1. Ensemble de douille de réception d'un organe de fixation pour une installation dans une ouverture (18) dans un élément (20) comprenant :
un corps tubulaire (14) taillé pour être insérable dans l'ouverture (18), ledit corps tubulaire présentant des filetages internes (22) ;
une extension tubulaire (15) sur ledit corps (14) s'étendant de manière axiale depuis ledit corps, ladite extension tubulaire comprenant une rainure circulaire s'ouvrant de manière radiale (16, 16') ;
un anneau élastique (12, 12') situé dans ladite rainure circulaire (16, 16') ;
dans lequel ledit corps tubulaire (14) est construit à partir d'un matériau permettant d'être développé de manière radiale après l'installation dans l'ouverture, de sorte qu'un ajustement suffisamment serré peut être établi entre le corps tubulaire (14) et l'ouverture (18) dans l'élément (20) par le développement radial du corps tubulaire, l'ajustement étant suffisant pour résister à un couple extérieur du corps tubulaire (14) par rapport à l'élément (20), et l'anneau élastique présente un diamètre extérieur statique (d11) plus grand que le diamètre extérieur (d7) du corps tubulaire (14); de sorte qu'après l'installation, l'anneau élastique (12, 12') est en contact adjacent avec l'élément (20) pour empêcher l'ensemble de douille (10) d'être retiré au travers de l'élément (20) ;
suite à quoi une fois que le corps tubulaire (14) est développé de manière radiale pour le tenir dans l'ouverture (18), un organe de fixation peut être vissé dans l'ouverture filetée (18).

2. Ensemble de douille de réception d'un organe de fixation selon la revendication 1, dans lequel le diamètre extérieur de l'anneau élastique (12, 12') diminue à mesure que l'anneau élastique s'étend de manière axiale vers l'extérieur dans la rainure circulaire (16, 16').

3. Ensemble de douille de réception d'un organe de fixation selon la revendication 2, dans lequel l'anneau élastique (12) décroît jusqu'à un diamètre (d8) au niveau d'une première extrémité qui est essentiellement égale au diamètre extérieur (d5) de l'extension tubulaire.

4. Ensemble de douille de réception d'un organe de fixation selon la revendication 1, dans lequel la surface extérieure du corps tubulaire est cylindrique.

5. Ensemble de douille de réception d'un organe de fixation selon les revendications 1, 2 ou 3, dans lequel l'anneau élastique (12, 12') est un anneau fendu.

6. Élément composite (20) présentant un premier et un deuxième côtés et une ouverture traversante (18) s'étendant entre le premier et le deuxième côtés ; comprenant un ensemble de douille de réception d'un organe de fixation selon l'une quelconque des revendications précédentes, dans lequel le corps tubulaire (14) est positionné au sein de l'ouverture (18) dans l'élément composite (20) et est déplacé pour placer l'anneau élastique (12, 12') contre un côté de l'élément, et le corps tubulaire est développé de manière radiale pour le maintenir dans l'ouverture, et suite à quoi un boulon peut être raccordé à la surface intérieure filetée du corps tubulaire.

7. Procédé d'installation d'un ensemble de douille de réception d'un organe de fixation dans une ouverture (18) dans un élément (20), comprenant les étapes consistant à :
fournir un ensemble de douille de réception d'un organe de fixation présentant un corps tubulaire (14) avec une surface extérieure cylindrique et une surface intérieure filetée (22), et une extension tubulaire (15) sur ledit corps s'étendant de manière axiale depuis ledit corps et comprenant une rainure circulaire s'ouvrant de manière radiale (16, 16');
positionner un anneau élastique (12, 12') dans ladite rainure circulaire (16, 16'), ledit anneau élastique présentant un diamètre extérieur dans un état libre qui est plus grand que le diamètre extérieur (d7) du corps tubulaire (14) ;
déplacer le corps tubulaire (14) et l'extension (15) dans et au travers de l'ouverture dans l'élément (20) provoquant la compression de l'anneau élastique (12, 12') dans la rainure circulaire (16, 16') et l'ouvrant à nouveau lorsqu'il sort de l'ouverture sur le côté opposé de l'élément (20) ;
fileter un manchon sacrificiel fileté de manière extérieure dans le corps tubulaire (14) ;
développer de manière radiale le corps tubulaire (14) pour établir un ajustement suffisamment serré entre le corps tubulaire (14) et l'ouverture (18) dans l'élément (20), avec l'anneau élastique essentiellement contre le côté de l'élément,
dans lequel la surface intérieure filetée (22) du corps tubulaire (14) est légèrement déformée au cours du développement radial du corps tubulaire (14) ;
retirer le manchon sacrificiel fileté de manière extérieure du corps tubulaire (14);
suit à quoi une portion filetée d'un organe de fixation peut être raccordée par filetage à la surface intérieure filetée légèrement déformée (22) du corps tubulaire (14), pour raccorder l'organe de fixation au corps tubulaire (14).

8. Procédé selon la revendication 7, comprenant l'étape consistant à fournir un mandrin (M) présentant une portion dont le diamètre augmente et développant de manière radiale le corps tubulaire (14) en déplaçant le mandrin (M) de manière axiale au travers du corps tubulaire (14) pour faire en sorte que la portion du mandrin dont diamètre augmente exerce une force dans une direction axiale sur le corps tubulaire (14).

9. Procédé selon la revendication 7, comprenant l'étape consistant à positionner l'anneau élastique (12, 12') dans ladite rainure circulaire (16, 16') qui présente un diamètre extérieur qui diminue à mesure que l'anneau élastique se développe de manière axiale vers l'extérieur, jusqu'à un diamètre sur son extrémité extérieure qui est essentiellement égal au diamètre extérieur de l'extension tubulaire, et insérer l'ensemble de réception d'un organe de fixation dans l'ouverture (18) dans l'élément (20), l'extrémité d'extension en premier, pour déplacer l'anneau élastique en contact avec une portion de l'élément entourant l'ouverture (18), et appliquer une force perpendiculairement sur la douille pour déplacer l'anneau élastique dans et au travers de l'ouverture dans une position où l'anneau élastique est positionné de manière adjacente vers l'extérieur du deuxième côté de l'ouverture.

10. Procédé selon la revendication 7, comprenant l'étape consistant à fournir un appareil de traction de mandrin (M), un mandrin présentant une extrémité de petit diamètre raccordée à l'appareil de traction (P), une extrémité opposée de plus grand diamètre et une section intermédiaire effilée, en plaçant un manchon fendu (5) sur la section de petit diamètre du mandrin, en plaçant ledit ensemble de douille sur le manchon fendu (5) quand il est sur la section de petit diamètre du mandrin (M), en insérant l'extrémité de grand diamètre du mandrin dans l'ouverture de l'élément, en déplaçant l'appareil de traction (P) et le mandrin (M) vers l'avant pour pousser l'extrémité de grand diamètre du mandrin (M) au travers de l'ouverture (18) et positionner l'ensemble de douille et le manchon fendu (5) à l'intérieur de l'ouverture (18) et avec l'anneau élastique (12, 12') positionné de manière adjacente au côté de l'élément opposé du tube de l'appareil de traction pour tracter le mandrin au travers du manchon fendu et de l'ensemble de douille, pour développer de manière radiale à la fois le manchon fendu (5) et l'ensemble de douille pour développer radialement de cette manière l'ensemble de douille dans un ajustement serré à l'intérieur de l'ouverture (18), puis retirer le mandrin (M) et le manchon fendu (5) de la douille, laissant la douille dans l'ouverture raccordée à l'élément.

11. Procédé selon la revendication 7, dans lequel la fourniture d'un ensemble de douille de réception d'un organe de fixation présentant un corps tubulaire (14) comprend le fait que le corps tubulaire (14) est cylindrique.
